# EUROPEAN PATENT APPLICATION

(11) **EP 4 815 118 A1**
(43) Date of publication of application: **30.09.2026**
(21) Application number: 26150425.2
(22) Date of filing: 06.01.2026
(51) Int. Cl.: H01M 10/6554, H01M 10/6555, H01M 10/617, H01M 50/242, H01M 50/249

(54) **VEHICLE UNDERCARRIAGE STRUCTURE**

(30) Priority: 26.03.2025 JP 2025052327
(71) Applicant: Toyota Jidosha Kabushiki Kaisha, Toyota-shi, Aichi-ken 471-8571 (JP)
(72) Inventor: ASANUMA, Kentaro, TOYOTA-SHI, AICHI-KEN, 471-8571 (JP); HORIGUCHI, Kotaro, TOYOTA-SHI, AICHI-KEN, 471-8571 (JP)
(74) Representative: Cabinet Beau de Loménie

(57) **Abstract**

A vehicle undercarriage structure includes a battery module (30) that includes a plurality of battery cells (32) arrayed in a predetermined direction, and that is disposed in a lower portion of a vehicle, a bracket (34) that is provided at an end portion of the battery module (30) in the predetermined direction, and a cover board (60) that is disposed on an upper face (30U) of the battery module (30) and is joined to the upper face (30U) of the battery module (30) at an intermediate portion in the predetermined direction via an adhesive layer (70), and that defines an air insulating layer (72) between the cover board (60) and the upper face (30U) of the battery module (30) at the bracket side.

## Description

### 1. Field of the Invention

The present disclosure relates to a vehicle undercarriage structure.

### 2. Description of Related Art

A battery installation structure is known in which a battery case that accommodates a battery module (battery stack) is installed on a downward side of a floor panel (floor pan) (e.g., see Japanese Unexamined Patent Application Publication No. 2018-202946 (JP 2018-202946 A)). In this battery installation structure, an upper cover portion of the battery case, which covers upper faces of the battery modules, also serves as a floor panel.

The battery module also has a plurality of battery cells stacked in a vehicle width direction. Both end portions of the battery module are fixed to respective lockers or the like via end plates.

### SUMMARY OF THE INVENTION

Now, when a load acts on the upper face of the battery module, the battery cells are prone to damage, and accordingly there is demand for protecting the battery cells.

Also, when heat from the battery cells disposed at end portions of the battery module is dissipated through brackets such as end plates and so forth, variance in temperature distribution within the battery module readily occurs.

An example of an object of the present disclosure is to reduce variance in temperature distribution within a battery module, while suppressing damage to battery cells.

A vehicle undercarriage structure according to a first aspect includes a battery module that includes a plurality of battery cells arrayed in a predetermined direction, and that is disposed in a lower portion of a vehicle, a bracket that is provided at an end portion of the battery module in the predetermined direction, and a cover board that is disposed on an upper face of the battery module and is joined to the upper face of the battery module at an intermediate portion in the predetermined direction via an adhesive layer, and that defines an air insulating layer between the cover board and the upper face of the battery module at a bracket side.

According to the vehicle undercarriage structure of the first aspect, the battery module has the battery cells that are arrayed in the predetermined direction. Also, the battery module is disposed in the lower portion of the vehicle. The bracket is provided at the end portion of this battery module in the predetermined direction.

The cover board is disposed on the upper face of the battery module. Protecting the upper face of the battery module by the cover board suppresses damage to the battery cells.

Now, as described above, the bracket is provided at the end portion of the battery module in the predetermined direction. Accordingly, when heat from the battery cell disposed at the end portion of the battery module in the predetermined direction is dissipated through the bracket, variance in the temperature distribution within the battery module readily occurs.

Conversely, according to the present embodiment, the cover board is joined to the upper face of the battery module at the intermediate portion in the predetermined direction via the adhesive layer, and defines the air insulating layer between the cover board and the upper face of the battery module on the bracket side.

Accordingly, in the intermediate portion of the battery module in the predetermined direction, heat from the battery cells is dissipated from the upper faces of these battery cells via the adhesive layer and the cover board. On the other hand, at the bracket side of the battery module, heat from the battery cell is suppressed from being dissipated from the upper face of the battery cell by the air insulating layer. These adhesive layer and air insulating layer adjust the amount of heat dissipation from the upper faces of the battery cells, thereby enabling suppression of variance in temperature distribution within the battery module.

Thus, according to this aspect, variance in the temperature distribution within the battery module can be suppressed, while suppressing damage to the battery cells.

According to the vehicle undercarriage structure of a second aspect, in the vehicle undercarriage structure of the first aspect, the cover board is disposed spanning from one end side to another end side of the battery module in the predetermined direction, and the air insulating layer is defined at least between an upper face of a battery cell adjacent to the bracket and a lower face of the cover board.

According to the vehicle undercarriage structure of the second aspect, the cover board is disposed spanning from one end side to the other end side in the predetermined direction of the battery module. This suppresses damage to the battery cells from one end side to the other end side of the battery module in the predetermined direction.

Also, the air insulating layer is defined at least between the upper face of the battery cell adjacent to the bracket and the lower face of the cover board. Now, heat from the battery cell adjacent to the bracket is dissipated via the brackets.

Conversely, in this aspect, the air insulating layer suppresses heat dissipation from the upper face of the battery cell adjacent to the bracket. As a result, temperature drop of the battery cell adjacent to the bracket is suppressed. Accordingly, variance in temperature distribution within the battery module can be efficiently suppressed.

According to the vehicle undercarriage structure of a third aspect, in the vehicle undercarriage structure according to the second aspect, the battery module includes a plurality of thermal insulation materials, each of which is provided between battery cells that are adjacent to each other.

According to the vehicle undercarriage structure of the third aspect, the battery module has the thermal insulation materials, each provided between the battery cells that are adjacent to each other. These thermal insulation materials insulate the battery cells that are adjacent to each other, from each other.

Accordingly, even when the heat of the battery cell adjacent to the bracket is dissipated via the bracket, the temperature drop of the other battery cells adjacent to this battery cell is reduced. Hence, variance in temperature distribution within the battery module can be further suppressed.

According to the vehicle undercarriage structure of a fourth aspect, the vehicle undercarriage structure according to any one of the first to third aspects includes a battery case that accommodates the battery module and the cover board, in which the bracket is fixed to the battery case.

The vehicle undercarriage structure according to the fourth aspect includes the battery case that accommodates the battery module and the cover board. The bracket provided at the end portion of the battery module in the predetermined direction is fixed to this battery case. Accordingly, heat from the battery cell disposed at the end portion of the battery module is dissipated to the battery case via the bracket, whereby variance in the temperature distribution within the battery module occurs more readily.

Conversely, according to this aspect, as described above, the adhesive layer and the air insulating layer between the upper face of the battery module and the cover board adjust the amount of heat dissipation from the upper faces of the battery cells, whereby variance in the temperature distribution within the battery module can be suppressed.

Also, protecting the battery module by the battery case and the cover board suppresses damage to the battery module.

Further, fixing the bracket, provided at the end portion of the battery module in the predetermined direction, to the battery case, suppresses displacement and so forth of the battery modules relative to the battery case. Accordingly, damage to the battery module is further suppressed.

According to the vehicle undercarriage structure of a fifth aspect, in the vehicle undercarriage structure according to the fourth aspect, the battery case includes an upper cover portion that covers the cover board, and a lower face of the upper cover portion is bonded to an upper face of the cover board.

According to the vehicle undercarriage structure of the fifth aspect, the battery case has the upper cover portion that covers the cover board. The lower face of this upper cover portion is bonded to the upper face of the cover board. That is to say, the upper face of the battery module is bonded to the lower face of the upper cover portion via the cover board.

Now, for example, when a colliding object collides with the vehicle in which the battery case is installed, the battery module may move toward the colliding object relatively, due to inertial force within the battery case, and the colliding object may interfere with the battery module.

Conversely, in this aspect, as described above, the upper face of the battery module is bonded to the lower face of the upper cover portion via the cover board. This enables the upper cover portion, the cover board, and the battery module to more readily move integrally in the opposite direction from the colliding object colliding with the vehicle in which the battery case is installed, in the event of a collision with the colliding object. Thus, interference of the colliding object with the battery module can be suppressed.

As an example, the present disclosure can reduce variance in temperature distribution within the battery module while suppressing damage to the battery cells.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a cross-sectional view of a vehicle to which a vehicle undercarriage structure according to an embodiment is applied, as viewed in a vehicle width direction;
FIG. 2 is a plan view illustrating a battery module illustrated in FIG. 1;
FIG. 3 is a cross-sectional view taken along line 3-3 in FIG. 2; and
FIG. 4 is an exploded cross-sectional view corresponding to FIG. 3, in which the battery module, an upper cover, and a cover board are disassembled.

### DETAILED DESCRIPTION OF EMBODIMENTS

An embodiment will be described below with reference to the drawings. Note that arrow FR shown as appropriate in each drawing indicates a forward side in the vehicle (forward side in vehicle front-rear direction), and arrow UP indicates an upward side in the vehicle (upward side in vehicle up-down direction). Also, arrow OUT indicates an outward side in a vehicle width direction. Also, in the following description, unless otherwise specified, front and rear, up and down, and right and left refer to front and rear in the vehicle front-rear direction, up and down in the vehicle up-down direction, and right and left in the vehicle width direction, respectively.

### Vehicle

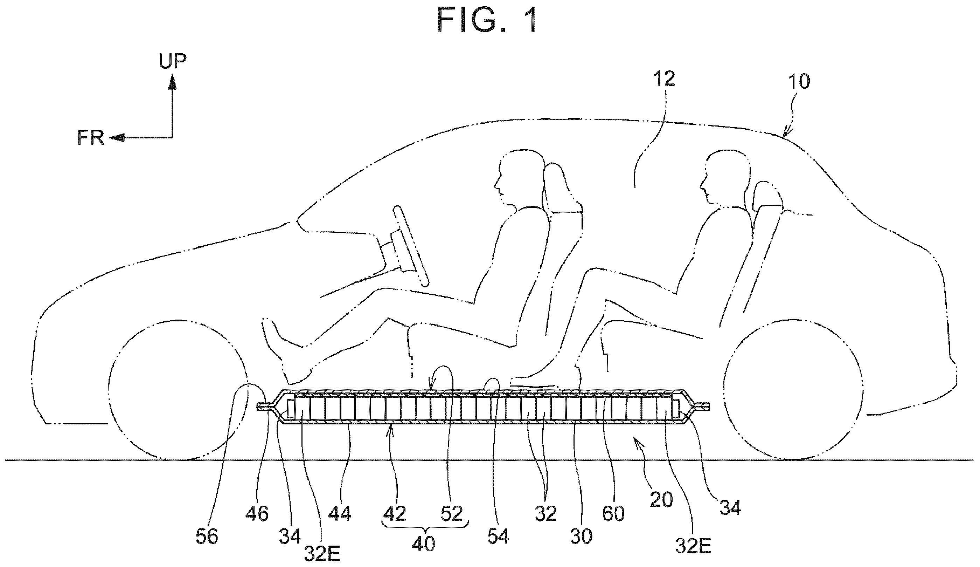

FIG. 1 illustrates a vehicle 10 to which a vehicle undercarriage structure according to the present embodiment is applied. The vehicle 10 is, for example, a battery electric vehicle using an electric motor that is omitted from illustration as a drive source, or a hybrid electric vehicle using both an electric motor and an internal combustion engine as drive sources.

### Battery

A battery (battery pack) 20 is installed in a lower portion of the vehicle 10. The battery 20 is disposed spanning a pair of rockers, which is omitted from illustration, disposed on both sides of the vehicle 10 across the vehicle width direction. This battery 20 includes a plurality of battery modules 30, a battery case 40, and a plurality of cover boards 60.

### Battery Module

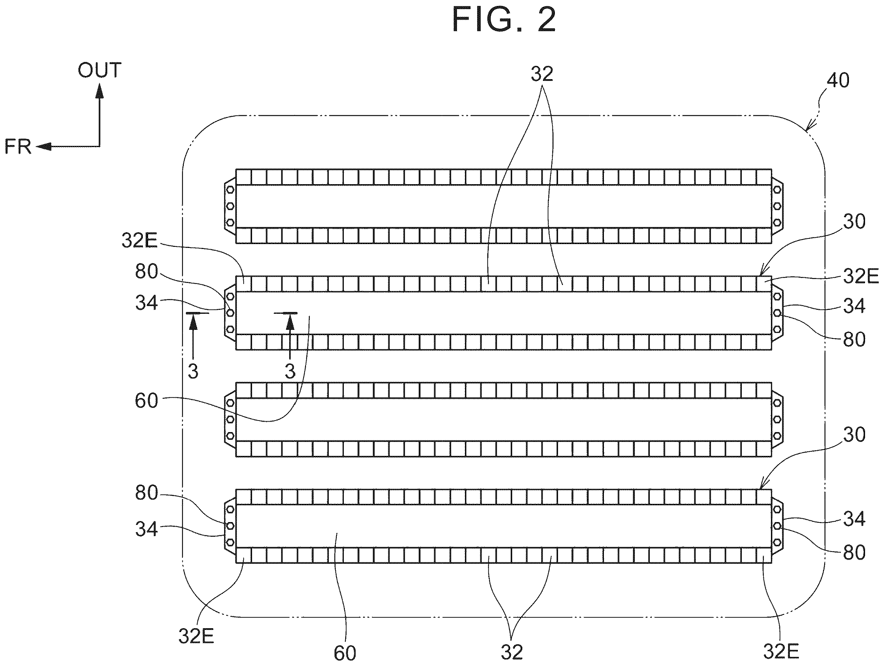

As illustrated in FIG. 2, the battery modules (battery stacks) 30 are disposed with the longitudinal directions thereof aligned in the vehicle front-rear direction and also arrayed in the vehicle width direction. Both end portions of each of the battery modules 30 in the longitudinal direction are fixed to a lower cover 42 (see FIG. 1) of the battery case 40, which will be described later, via brackets (end plates) 34, which will be described later.

Each of the battery modules 30 includes a plurality of battery cells 32 and a plurality of thermal insulation materials 36. The battery cells 32 are storage batteries (secondary batteries) that store power to be supplied to the electric motor and the like, which are described above. These battery cells 32 are arrayed in the longitudinal direction of the battery module 30 (vehicle front-rear direction). That is to say, in the present embodiment, the array direction of the battery cells 32 and the longitudinal direction of the battery module 30 agree with each other.

Note that the longitudinal direction of the battery module 30 (vehicle front-rear direction) is an example of a predetermined direction.

Each of the battery cells 32 is formed in the shape of a flat rectangular cuboid. Also, each of the battery cells 32 is disposed with the longitudinal direction thereof in the vehicle width direction, and also the thickness direction thereof in the vehicle front-rear direction. These battery cells 32 are electrically connected in series in a state of being stacked in the longitudinal direction of the battery module 30.

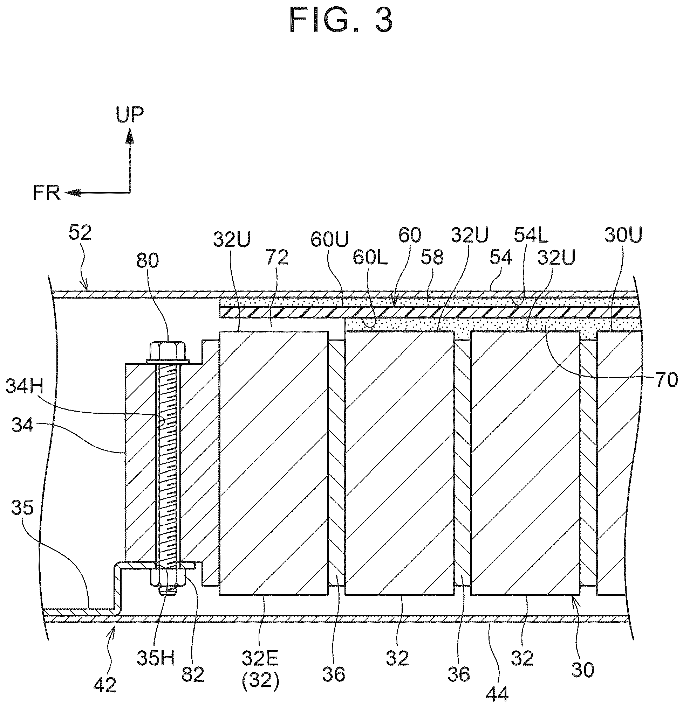

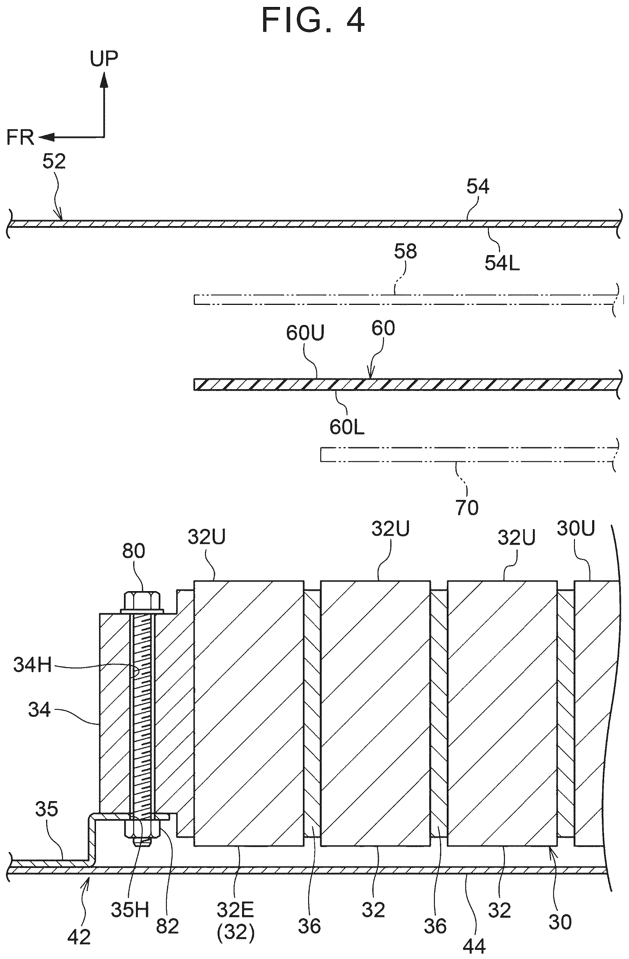

As illustrated in FIGS. 3 and 4, each of the thermal insulation materials 36 is provided between the battery cells 32 that are adjacent to each other. By insulating the adjacent battery cells 32 with this thermal insulation material 36, when one of the adjacent battery cells 32 becomes hot, for example, influence of the heat on the other adjacent battery cells 32 is reduced.

The thermal insulation material 36 is formed as sheets using, for example, rock wool, glass wool, foam material, or the like. Also, the thermal insulation material 36 is interposed between the side faces of the adjacent battery cells 32 and is held in a clamped state by side faces of the adjacent battery cells 32. This thermal insulation material 36 is disposed along the longitudinal direction of the battery cells 32 and is also disposed from a lower end side to an upper end side of the battery cells 32.

Note that the cover boards 60, which will be described later, are bonded to upper faces 30U of the battery modules 30. Also, "upper face 30U of battery module 30" is a concept that includes upper faces 32U of the battery cells 32 and upper faces of the thermal insulation materials 36.

### Battery Case

As illustrated in FIG. 1, the battery modules 30 are accommodated in the battery case 40. The battery case 40 is formed as a flat box shape as a whole, and is disposed on a downward side from a battery frame that is omitted from illustration. This battery case 40 has a lower cover 42 and an upper cover 52 that are separated in the vehicle up-down direction.

The lower cover 42 is formed from a metal plate such as a steel plate or the like. Also, the lower cover 42 is formed in a box shape with an upward side that is open, and makes up a lower portion of the battery case 40. A lower wall portion (bottom wall portion) of this lower cover 42 serves as a lower cover portion 44 that covers lower faces of the battery modules 30 from a downward side thereof.

The lower cover portion 44 is formed in a plate shape and is disposed with a thickness direction thereof in the vehicle up-down direction. Also, a flange portion 46 that protrudes to the outward side is provided at an end portion of an opening side of the lower cover 42. The upper cover 52 is disposed on the upward side of this lower cover 42.

The upper cover 52 is formed from a metal plate such as a steel plate or the like. Also, the upper cover 52 is formed in a box shape with a downward side that is open, and makes up an upper part of the battery case 40. An upper wall portion (top wall portion) of this upper cover 52 is an upper cover portion 54 that covers the upper faces 30U of the battery modules 30 from the upward side thereof. The upper cover portion 54 is formed in a plate shape and is disposed with a thickness direction thereof in the vehicle up-down direction.

A flange portion 56 that protrudes to the outward side is provided at an end portion of an opening side of the upper cover 52. The flange portion 56 of this upper cover 52 and the flange portion 46 of the lower cover 42 are joined together by bolts and nuts, or the like, omitted from illustration, in a state of being overlaid in the vehicle up-down direction.

The upper cover portion 54 makes up a floor of a vehicle cabin 12. In other words, the upper cover portion 54 also serves as a floor panel that makes up the floor of the vehicle cabin 12. On an upper face of this upper cover portion 54 are disposed, for example, a seat cross member that is omitted from illustration and extends in the vehicle width direction, a cross member that is omitted from illustration and makes up a battery frame, and so forth.

Note that a portion of the upper cover portion 54 may form a portion of the floor of the vehicle cabin 12. That is to say, at least a portion of the upper cover portion 54 may form the floor of the vehicle cabin 12. Also, the floor of the vehicle cabin 12 may be formed of the upper cover portion 54, a floor panel, and so forth, for example.

### Cover Board

As illustrated in FIG. 2, the battery case 40 accommodates the cover boards 60. The cover boards 60 are protective members that protect the upper faces 30U of the battery modules 30. In addition, by being interposed between the upper cover portion 54 (FIG. 3) and the battery modules 30, the cover boards 60 also function as load distribution members (planar pressure distribution members) that distribute and transmit a vertical load from the upper cover portion 54 to the upper faces 30U of the battery modules 30.

The cover boards 60 are made of, for example, resin (resin boards) and are disposed with the thickness direction thereof in the vehicle up-down direction. Also, the cover boards 60 are formed in rectangular shapes with the longitudinal directions thereof in the vehicle front-rear direction. These cover boards 60 are disposed with spacings therebetween in the vehicle width direction so as to be situated above the upper faces 30U of the battery modules 30. Each of the cover boards 60 extends from one end side to the other end side in the longitudinal direction of a corresponding battery module 30.

As illustrated in FIGS. 3 and 4, upper faces 60U of the cover boards 60 are bonded to a lower face 54L of the upper cover portion 54. Specifically, the upper faces 60U of the cover boards 60 and the lower face 54L of the upper cover portion 54 are bonded together via a plurality of adhesive layers 58. The adhesive layers 58 are formed of, for example, a cured silicone adhesive. Note that the material of the adhesive layers 58 can be changed as appropriate.

Lower faces 60L of the cover boards 60 are bonded to the upper faces 30U of the battery modules 30. Specifically, the lower faces 60L of the cover boards 60 and the upper faces 30U of the battery modules 30 are bonded together via an adhesive layer 70. The adhesive layer 70 is formed of, for example, a cured urethane adhesive. Note that the material of the adhesive layer 70 can be changed as appropriate.

Now, the upper faces 30U of the battery modules 30 are formed of the upper faces 32U of multiple battery cells 32 arrayed in the longitudinal direction of the battery modules 30. There is a possibility of difference in height among the upper faces 32U of the battery cells 32 being present, due to manufacturing error and so forth of the battery cells 32.

With respect to this issue, the lower faces 60L of the cover boards 60 and the upper faces 30U of the battery modules 30 are bonded together via the adhesive layer 70 in the present embodiment, thereby absorbing the difference in height among the upper faces 32U of the battery cells 32. As a result, the lower faces 60L of the cover boards 60 and the upper faces 30U of the battery modules 30 are bonded together by a predetermined adhesive strength.

Also, as described above, both end portions of the battery modules 30 in the longitudinal direction are fixed to the lower cover 42 via the brackets 34. The brackets 34 are made of resin, metal, or the like, and have a flat rectangular cuboid shapes. Also, each of the brackets 34 is disposed with a longitudinal direction thereof in the vehicle width direction, and also with a thickness direction thereof in the vehicle front-rear direction.

Each of the brackets 34 is attached to a battery cell 32 (hereinafter, sometimes referred to as "battery cell (end battery cell) 32E") disposed at each end portion of the battery modules 30 in the longitudinal direction.

Specifically, as illustrated in FIG. 3, the bracket 34 is disposed along a side face of the battery cell 32E and attached to this side face. The bracket 34 is also capable of exchanging heat with the battery cell 32E. This bracket 34 is fixed to the battery case 40.

Note that a thermal insulation material, such as, for example, the thermal insulation material 36 or the like, may be provided between the bracket 34 and the battery cell 32E.

The bracket 34 is placed on a stay 35 provided on the lower cover 42. This bracket 34 and the stay 35 are formed with through holes 34H, 35H passing through in the up-down direction. The bracket 34 is bolted to the stay 35 by bolts 80 that pass through these through holes 34H, 35H, and nuts 82. That is to say, the bracket 34 is fixed to the lower cover 42 of the battery case 40 via the stay 35.

Thus, heat from the battery cell 32E is dissipated to the lower cover 42 via the bracket 34 and the stay 35. Accordingly, the battery cell 32E becomes cooler than the other battery cells 32 more readily, and there is variance in the temperature distribution within the battery module 30 more readily.

Hence, in the present embodiment, an air insulating layer 72 is formed between the battery cell 32E and the cover board 60. This air insulating layer 72 insulates the battery cell 32E from the cover board 60, thereby suppressing temperature drop of the battery cell 32E.

Specifically, the lower face 60L of the cover board 60 is joined to the upper faces 30U of the battery modules 30 at intermediate portions in the longitudinal direction via the adhesive layer 70. On the other hand, the lower face 60L of the cover board 60 is not joined to the upper face 30U at the end portions of the battery module 30 on the bracket 34 sides, i.e., the upper faces 32U of the battery cells 32E, via the adhesive layer 70. Thus, the air insulating layer (air layer) 72 is formed between the lower face 60L of the cover board 60 and the upper faces 32U of the battery cells 32E.

### Bonding Method of Battery Modules and Cover Boards

Next, an example of a bonding method of the battery modules 30 and the cover boards 60 will be described.

When bonding the upper faces 30U of the battery modules 30 and the lower faces 60L of the cover boards 60 via the adhesive layers 70, for example, adhesive is applied to the upper faces 30U at the intermediate portions of the battery modules 30 in the longitudinal direction.

In this state, the lower faces 60L of the cover boards 60 are placed on the upper faces 30U of the battery modules 30 at the intermediate portions in the longitudinal direction via the adhesive, and the adhesive spreads out between the upper faces 30U of the battery modules 30 and the lower faces 60L of the cover boards 60. At this time, the amount of the adhesive is adjusted such that the adhesive does not flow onto the upper face 32U sides of the battery cells 32E.

Thus, as illustrated in FIG. 3, the lower faces 60L of the cover boards 60 are joined to the upper faces 30U of the battery modules 30 at the intermediate portions in the longitudinal direction, via the adhesive layers 70, and the air insulating layer 72 is also formed between the lower faces 60L of the cover boards 60 and the battery cells 32E.

Note that the method of bonding the upper faces 30U of the battery modules 30 and the lower faces 60L of the cover boards 60 is not limited to the above-described method, and can be changed as appropriate.

### Effects

Next, effects of the present embodiment will be described.

As illustrated in FIG. 2, in the vehicle undercarriage structure according to the present embodiment, the battery modules 30 have the battery cells 32 arrayed in the vehicle front-rear direction. Also, the battery modules 30 are disposed in the lower portion of the vehicle 10. The brackets 34 are provided at respective end portions of these battery modules 30 in the longitudinal direction.

As illustrated in FIG. 3, the cover boards 60 are disposed on the upper faces 30U of the battery modules 30. By protecting the upper faces 30U of the battery modules 30 by these cover boards 60, damage to the battery cells 32 is suppressed.

Now, as described above, the brackets 34 are provided at respective end portions of the battery modules 30 in the longitudinal direction. Accordingly, when heat from the battery cells 32E disposed at both end portions of the battery modules 30 in the longitudinal direction is dissipated through the brackets 34, variance in the temperature distribution within the battery modules 30 readily occurs.

Conversely, in the present embodiment, the cover boards 60 are joined to the upper faces 30U of the battery modules 30 at intermediate portions thereof in the longitudinal direction, via the adhesive layer 70, and also an air insulating layer 72 is formed between the cover boards and the upper faces 30U on the bracket 34 sides of the battery module 30.

Thus, in the intermediate portions of the battery modules 30 in the longitudinal direction, heat from the battery cells 32 is dissipated from the upper faces 32U of the battery cells 32 via the adhesive layer 70 and the cover boards 60. On the other hand, on the bracket 34 sides of the battery modules 30, the air insulating layer 72 suppresses the heat of the battery cells 32E from being dissipated from the upper faces 32U of the battery cells 32E. These adhesive layers 70 and the air insulating layer 72 adjust the amount of heat dissipation from the upper faces 30U of the battery modules 30, whereby variance in temperature distribution within the battery modules 30 can be suppressed.

Thus, according to the present embodiment, variance in temperature distribution within the battery modules 30 can be reduced, while suppressing damage to the battery cells 32.

Also, the cover boards 60 are disposed extending from one end to the other end in the longitudinal direction of corresponding battery modules 30. This suppresses damage to the battery cells 32 from one end side to the other end side of the battery module 30 in the longitudinal direction.

Also, the air insulating layer 72 is formed between the upper faces 32U of the battery cells 32E adjacent to the brackets 34 and the lower faces 60L of the cover boards 60. Now, heat from the battery cells 32E adjacent to the brackets 34 is dissipated via the brackets 34.

Conversely, according to the present embodiment, the air insulating layer 72 suppresses heat dissipation from the upper faces 32U of the battery cells 32E adjacent to the brackets 34. As a result, the temperature drop of the battery cell 32E adjacent to the bracket 34 is suppressed. Accordingly, variance in temperature distribution within the battery module 30 can be efficiently suppressed.

Furthermore, the battery modules 30 have multiple thermal insulation materials 36 each provided between the battery cells 32 that are adjacent to each other. These thermal insulation materials 36 insulate the battery cells 32 that are adjacent to each other, from each other.

Accordingly, even when the heat of the battery cells 32E adjacent to the brackets 34 is dissipated via the brackets 34, the temperature drop of the other battery cells 32 adjacent to these battery cells 32E is reduced. Hence, variance in temperature distribution within the battery modules 30 can be further suppressed.

Also, the battery modules 30 and the cover boards 60 are accommodated in the battery case 40. The battery case 40 has the upper cover 52 and the lower cover 42 that are assembled in the vehicle up-down direction.

The brackets 34 provided at both end portions of the battery modules 30 in the longitudinal direction are fixed to the lower cover 42 of the battery case 40. Accordingly, when heat from the battery cells 32E disposed at both end portions of the battery modules 30 is dissipated to the lower cover 42 via the brackets 34, variance in the temperature distribution within the battery modules 30 readily occurs.

In contrast, according to the present embodiment, as described above, the adhesive layers 70 and the air insulating layer 72 between the upper faces 30U of the battery modules 30 and the cover boards 60 adjust the amount of heat dissipation from the upper faces 30U of the battery modules 30, whereby variance in temperature distribution within the battery modules 30 can be suppressed.

Also, protecting the battery modules 30 by the battery case 40 and the cover boards 60 suppresses damage to the battery modules 30.

Further, fixing the brackets 34, provided at both end portions of the battery modules 30 in the longitudinal direction, to the lower cover 42 suppresses displacement and so forth of the battery modules 30 relative to the battery case 40. Accordingly, damage to the battery modules 30 is further suppressed.

Also, the upper cover 52 of the battery case 40 has the upper cover portion 54 that covers the cover boards 60. This upper cover portion 54 makes up the floor of the vehicle cabin 12. Thus, according to the present embodiment, the number of parts can be reduced as compared to when the floor of the vehicle cabin 12 is formed by a floor panel separate from the upper cover portion 54.

On the other hand, when the upper cover portion 54 forms the floor of the vehicle cabin 12, the weight of occupants and so forth is transmitted as a vertical load to a local area on the upper faces 30U of the battery modules 30 via the upper cover portion 54, thereby making the battery modules 30 more susceptible to damage and the like.

In contrast, according to the present embodiment, the vertical load acting on the upper cover portion 54 is dispersed and transferred to the upper faces 30U at the intermediate portions of the battery modules 30 in the longitudinal direction, via the adhesive layers 58, the cover boards 60, and the adhesive layers 70. Accordingly, damage and so forth to the battery modules 30 can be suppressed.

Also, the lower face 54L of the upper cover portion 54 is bonded to the upper faces 60U of the cover boards 60. That is to say, the upper faces 30U of the battery modules 30 are bonded to the lower face 54L of the upper cover portion 54 via the cover boards 60.

Now, for example, when a colliding object collides with the vehicle 10 in which the battery case 40 is installed, the battery modules 30 may move toward the colliding object relatively, due to inertial force within the battery case 40, and the colliding object may interfere with the battery module 30.

Conversely, according to the present embodiment, the upper faces 30U of the battery modules 30 are bonded to the lower faces 54L of the upper cover portion 54 via the cover boards 60, as described above. This enables the upper cover portion 54, the cover boards 60, and the battery modules 30 to move integrally in the opposite direction from the colliding object colliding with the vehicle 10 in which the battery case 40 is installed, in the event of a collision with the colliding object. Thus, interference of the colliding object with the battery modules 30 can be suppressed.

Also, the battery cells 32 are arrayed in the longitudinal direction of the battery modules 30, i.e., in the vehicle front-rear direction. Thus, according to the present embodiment, the number of battery cells 32 that can be arrayed in a single row can be increased as compared to when the battery cells 32 are arrayed in the vehicle width direction.

Also, the upper cover 52 is made of metal. This enables reduction in the thickness of the upper cover portion 54 that makes up the upper cover 52, while ensuring the strength of the upper cover portion 54.

On the other hand, the cover boards 60 are made of resin. This enables reduction in the weight of the cover boards 60, while improving the bonding of the cover boards 60, the battery modules 30, and the upper cover portion 54.

Also, interposing the cover boards 60 that are made of resin between the battery modules 30 and the upper cover portion 54 enables the upper cover 52 that forms the floor of the vehicle cabin 12 and the battery modules 30 to be insulated.

### Modifications

Next, modifications of the above embodiment will be described.

In the above embodiment, the air insulating layer 72 is formed between the upper faces 32U of the battery cells 32E adjacent to the brackets 34 and the lower faces 60L of the cover boards 60. However, it is sufficient for the air insulating layer 72 to be formed at least between the upper faces 32U of the battery cells 32E and the lower faces 60L of the cover boards 60. Accordingly, for example, the air insulating layer 72 may also be formed between the upper faces 32U of the battery cells 32E and other battery cells 32 adjacent to these battery cells 32E, and the lower faces 60L of the cover boards 60.

Also, in the above embodiment, the thermal insulation materials 36 are provided between battery cells 32 that are adjacent to each other. However, the thermal insulation materials 36 can be omitted as appropriate.

Also, in the above embodiment, the brackets 34 are provided at both end portions of the battery modules 30 in the longitudinal direction. However, the brackets 34 are not limited to being provided at both end portions of the battery modules 30 in the longitudinal direction, and may be provided at just one end portion of the battery modules 30 in the longitudinal direction.

Also, in the above embodiment, the upper faces 60U of the cover boards 60 are bonded to the lower face 54L of the upper cover portion 54. However, the upper faces 60U of the cover boards 60 do not have to be bonded to the lower face 54L of the upper cover portion 54.

Also, in the above embodiment, the cover boards 60 are made of resin. However, the cover boards 60 are not limited to being made of resin, and may be made of metal, for example.

Also, in the above embodiment, the upper cover portion 54 of the upper cover 52 forms the floor of the vehicle cabin 12. However, the floor of the vehicle cabin 12 is not limited to being formed by the upper cover portion 54, and may be formed by a floor panel or the like provided on the upper cover portion 54.

Also, in the above embodiment, the upper cover 52 is formed in a box shape with a downward side that is open. However, the upper cover 52 is not limited to a box shape with a downward side that is open, and may be formed in a flat plate shape, for example.

Also, in the above embodiment, the battery modules 30 are disposed with the longitudinal direction thereof in the vehicle front-rear direction. However, the battery modules 30 may be disposed with the longitudinal direction thereof in the vehicle width direction. In this case, the battery cells 32 that make up the battery modules 30 are arrayed in the vehicle width direction.

Also, in the above embodiment, the battery case 40 accommodates multiple battery modules 30. However, the battery case 40 can accommodate at least one battery module 30.

Also, in the above embodiment, the multiple battery modules 30 are accommodated in the battery case 40. However, the battery case 40 can be omitted as appropriate.

Although an embodiment of the present disclosure has been described above, the present disclosure is not limited to such an embodiment, the embodiment may be combined with various modifications as appropriate, and it is needless to say that the present disclosure can carried out in various forms without departing from the spirit of the disclosure.

Note that the following appendices are further disclosed regarding the above-described embodiment.

### Appendix 1

A vehicle undercarriage structure, including
a battery module that includes a plurality of battery cells arrayed in a predetermined direction, and that is disposed in a lower portion of a vehicle,
a bracket that is provided at an end portion of the battery module in the predetermined direction, and
a cover board that is disposed on an upper face of the battery module and is joined to the upper face of the battery module at an intermediate portion in the predetermined direction via an adhesive layer, and that defines an air insulating layer between the cover board and the upper face of the battery module at a bracket side.

### Appendix 2

The vehicle undercarriage structure according to Appendix 1, in which
the cover board is disposed spanning from one end side to another end side of the battery module in the predetermined direction, and
the air insulating layer is defined at least between an upper face of a battery cell adjacent to the bracket and a lower face of the cover board.

### Appendix 3

The vehicle undercarriage structure according to Appendix 1 or 2, in which the battery module includes a plurality of thermal insulation materials, each of which is provided between battery cells that are adjacent to each other.

### Appendix 4

The vehicle undercarriage structure according to any one of Appendices 1 to 3, further including a battery case that accommodates the battery module and the cover board in which the bracket is fixed to the battery case.

### Appendix 5

The vehicle undercarriage structure according to Appendix 4, in which
the battery case includes an upper cover portion that covers the cover board, and a lower face of the upper cover portion is bonded to an upper face of the cover board.

## Claims

1. A vehicle undercarriage structure, comprising:
a battery module (30) that includes a plurality of battery cells (32) arrayed in a predetermined direction, and that is configured to be disposed in a lower portion of a vehicle (10);
a bracket (34) that is provided at an end portion of the battery module (30) in the predetermined direction; and
a cover board (60) that is disposed on an upper face (30U) of the battery module (30) and is joined to the upper face (30U) of the battery module (30) at an intermediate portion in the predetermined direction via an adhesive layer (70), and that defines an air insulating layer (72) between the cover board (60) and the upper face (30U) of the battery module (30) at a bracket side.

2. The vehicle undercarriage structure according to claim 1, wherein
the cover board (60) is disposed spanning from one end side to another end side of the battery module (30) in the predetermined direction, and
the air insulating layer (72) is defined at least between an upper face (30U) of a battery cell (30) adjacent to the bracket (34) and a lower face (60L) of the cover board (60).

3. The vehicle undercarriage structure according to claim 2, wherein the battery module (30) includes a plurality of thermal insulation materials (36), each of which is provided between battery cells (32) that are adjacent to each other.

4. The vehicle undercarriage structure according to any one of claims 1 to 3, further comprising a battery case (40) that accommodates the battery module (30) and the cover board (60), wherein the bracket (34) is fixed to the battery case (40).

5. The vehicle undercarriage structure according to claim 4, wherein
the battery case (40) includes an upper cover portion (54) that covers the cover board (60), and
a lower face (54L) of the upper cover portion (54) is bonded to an upper face (60U) of the cover board (60).
